(19) Europäisches Patentamt
European Patent Office
Office européen des brevets

(11) EP 0 468 373 B1

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(51) Int Cl.[6]: **C07F 7/08**, C07F 7/14

(21) Anmeldenummer: **91112047.5**

(22) Anmeldetag: **18.07.1991**

(54) **Verfahren zur Herstellung von Aryl-alkylmethylsilanen**

Process for the preparation of aryl-alkyl-methylsilanes

Procédé de préparation de silanes aryle-alcyle-méthyliques

(84) Benannte Vertragsstaaten:
**BE CH DE FR GB IT LI NL**

(30) Priorität: **21.07.1990 DE 4023288**

(43) Veröffentlichungstag der Anmeldung:
**29.01.1992 Patentblatt 1992/05**

(73) Patentinhaber: **Hoechst Schering AgrEvo GmbH**
**D-13342 Berlin (DE)**

(72) Erfinder: **Lachhein, Stephen, Dr.**
**W-6238 Hofheim am Taunus (DE)**

(56) Entgegenhaltungen:
**EP-A- 0 224 024** **FR-A- 2 575 465**
**GB-A- 1 258 852**

- **CHEMICAL ABSTRACTS, Band 84, Nr. 21, 24. Mai 1976, Columbus, Ohio, USA B. MARCINIEC "Studies of the kineties and mechanism of oxi-dative cleavage of the silicon-hydrogen bond in tri- organosilanes in the presence of copper(II)**
- **salts." Zusammenfassung-Nr. 150 030h**
- **CHEMICAL ABSTRACTS, Band 92, Nr. 17, 28. April 1980, Columbus, Ohio, USA M. TAKAMIZAWA et al. "Organochlorosilanes" Zusammenfassung-Nr. 146 898v**
- **ORGANIC CHEMISTRY, Band 27, JUnner-April 1962, Easton, Pa., USA L.W. BREED & W.J. HAGGERTY Jr. "Trioganosilyl Deriva- tives of Chelated Titanates" Seiten 257-261**
- **COLLECTION OF CZECHOSLOVAK CHEMICAL COMMUNICATIONS, Band 30, 1965 J. HETFLEJS et al. "Organosilicon compounds XXXIX. Effect of (p d) dative bonds on solvolysis of organosilicon hydrides" Seiten 1643-1653**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 468 373 B1

Printed by Jouve, 75001 PARIS (FR)

**Beschreibung**

Gegenstand der vorliegenden Erfindung ist ein Verfahren zur Herstellung von Aryl-alkylmethylsilanen der allgemeinen Formel I

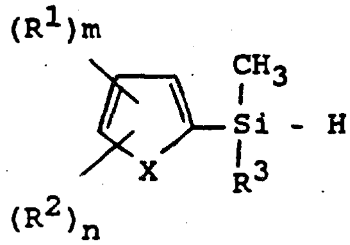

(I),

worin
X =CH=CH, N=CH, CH=N oder S,

$R^1$,$R^2$ = unabhängig voneinander H, Halogen, ($C_1$ bis $C_4$)-Alkyl ($C_1$ bis $C_4$)-Alkoxy, ($C_1$ bis $C_4$)-Alkylthio, ($C_1$ bis $C_4$) -Halogenalkyl, ($C_1$ bis $C_4$)-Halogenalkoxy, ($C_1$ bis $C_4$)-Halogenalkylthio,
$R^3$ = ($C_1$ bis $C_6$)-Alkyl und
m,n = 0, 1 oder 2

bedeuten, dadurch gekennzeichnet, daß man Dichlormethylsilan II

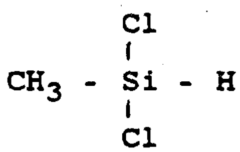

(II)

zunächst mit einem Arylmagnesiumhalogenid der allgemeinen Formel III

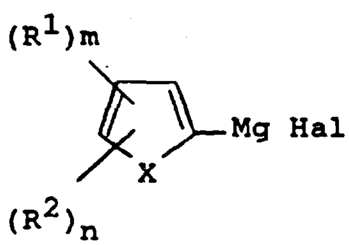

(III),

worin $R^1$, $R^2$, m, n und X die Bedeutung wie in Formel I besitzen und Hal=Halogen bedeutet, bei Temperaturen von -78 bis 0 °C und anschließend mit einem Alkylmagnesiumhalogenid der Formel IV

$$R^3\text{-Mg Hal} \qquad \text{(IV),}$$

worin $R^3$ die Bedeutung wie in Formel I hat und Hal=Halogen bedeutet, gegebenenfalls in Gegenwart eines Lösungemittels umsetzt.

Die Reihenfolge der Umsetzung des Dichlormethylsilans mit den Grignardreagenzien III und IV ist ein charakteristisches Merkmal des erfindungsgemäßen Verfahrens.
Die Umsetzung der Verbindung II mit der Verbindung III erfolgt bevorzugt bei Temperaturen von -50 bis -10 °C.

Die Verbindungen der Formeln I, III und IV sind bekannt und dienen als Vorstufen für insektizide, akarizide oder nematozide Wirkstoffe (EP-A 0224024 oder auch die unter 1) bis 7) zitierte Literatur).

Bekannt ist die Synthese der Verbindungen I ausgehend vom teuren und nur in geringem Umfang verfügbaren Chlordimethylsilan.
Alternativ lassen sich die Aryl-alkylmethylsilane I durch die im technischen Maßstab problematischen Reduktionen entsprechender Halogen- oder Alkoxysilane herstellen (EP 0224024).

Beide Nachteile vermeidet das erfindungsgemäße Verfahren. Besonders überraschend war dabei die mit sehr guten Ausbeuten verlaufende Bildung des Monosubstitutionsproduktes, da die selektive Bildung eines Monosubstitutionsproduktes nach einer Reaktion der Verbindung der Formel II mit einem der beiden Grignardreagenzien nicht vorhersehbar war. Zur Erzielung hoher Ausbeuten und zur Vermeidung einer aufwendigen Abtrennung des zunächst gewünschten

Monosubstitutionsproduktes ist die Selektivität der Reaktion der Verbindung der Formel II von entscheidender Bedeutung.
Andere Dihalogensilane wie z.B. Dichlordimethylsilan liefern mit einem Äquivalent Grignardreagenz nur mittlere Ausbeuten des Monosubstitutionsproduktes [1 bis 6)]. Weiterhin ist die selektive Grignardierung von Methyldichlorsilan II mit einem Äquivalent Grignardreagenz nicht vorbeschrieben [1 bis 6)].

Um eine genügend hohe Selektivität überhaupt erzielen zu können, werden daher häufig die Grignardreagenzien in einem ökonomisch und ökologisch ungünstigen, großen Überschuß eingesetzt [1,2,6)].
Eine weitere Möglichkeit der Reaktionslenkung in Richtung der Monosubstitutionsprodukte besteht im vorgezogenen Austausch einer Halogenfunktion gegen einen Aminrest, der nachfolgenden Umsetzung mit dem metallorganischen Reagenz und der abschließenden Umwandlung des resultierenden Aminosilans in das angestrebte Chlorsilan [7)]. Naturgemäß ist dieser Prozeß aufgrund seiner Stufenzahl für die großtechnische Anwendung nur bedingt geeignet.

1) K.A. Adrianov, N. V. Delazari, Doklady Akad. Nauk. SSSR 122, 393. Engl. Ed. S. 689;
2) R. N. Lewis, J. Amer. Chem. Soc. 70, 1115 (1948);
3) D. W. Lewis, G. C. Gainer, J. Amer. Chem. Soc. 74, 2931 (1952);
4) V. A. Ponomarenko, A. Snegova, Yu. P. Egorov, Izvest. Akad. Nauk. SSSR, Otdel Khim. Nauk 1960, 244; Engl. Ed. S. 222;
5) L.W. Breed, W. J. Haggerty jr., J. Org. Chem. 27, 257 (1962);
6) J. Hetfleijs, F. Mares, V. Clevalovsky, Collection Czech. Chem. Commun. 30, 1643 (1965);
7) M. Takamizawa, M. Unemura (Shin-Etsu Chem. Industry Co., Ltd.), Jpn. Kokai Tokkyo Koko 79, 109, 923 (29.8.1979), Appl. 78/16063 (15.2.1978); C. A. 92, 146898 (1980);

Bei geeigneter Reaktionsführung reagiert die Verbindung der Formel II (Methyldichlorsilan) jedoch überraschenderweise völlig selektiv mit einem Äquivalent Grignardreagenz der Formel III zu den üblicherweise nicht isolierten Intermediaten der allgemeinen Formel V a

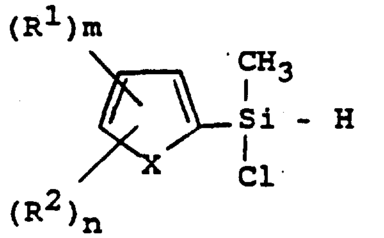
(V a),

die dann nachfolgend mit einem Äquivalent Grignardreagenz der Formel IV die Verbindungen der Formel I liefern. Die Ausbeuten bei dem erfindungsgemäßen Verfahren liegen bei größer 90 % d. Th.. Zur selektiven Bildung der Produkte I ist es unbedingt nötig, die Reihenfolge der Grignardreaktionen gemäß dem erfindungsgemäßen Verfahren einzuhalten. Wird das Methyldichlorsilan II zunächst mit dem Grignardreagenz IV und dann anschließend mit dem Grignardreagenz III umgesetzt, so sinkt die Selektivität und damit die Ausbeute I drastisch ab.

Es war somit überraschend und unerwartet, daß die Umsetzung der Verbindung der Formel III mit II entgegen den Literaturbeispielen in hohen Ausbeuten an Monosubstitutionsprodukt abläuft.

Das Monosubstitutionsprodukt V b kann analog den Literaturbeispielen (siehe Vergleichsbeispiel I) nicht in den gewünschten Ausbeuten und Reinheiten durch Umsetzung der Verbindung II mit der Verbindung IV hergestellt werden

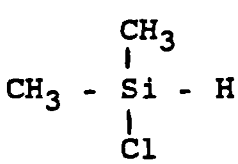
(V b).

Ferner ist es erforderlich die erste Grignardreaktion zum Monosubstitutionsprodukt V a im Temperaturbereich zwischen -78 und 0 °C, bevorzugt bei -50 bis -10 °C durchzuführen, wenn genügend große Selektivität und Ausbeuten über 90 % d. Th. erreicht werden sollen, wobei der optimale Temperaturbereich mit dem organischen Rest des Grignardreagenzes III variiert (siehe Vergleichsbeispiel II). Der Ersatz des zweiten Halogens kann dann bei beliebigen Temperaturen innerhalb der Intervalls -78 bis 200 °C, bevorzugt 0 bis 100 °C, erfolgen. Als Lösungsmittel kommen etherische Solventien wie z.B. Diethylether, Diisopropylether, Dibutylether, Tetrahydrofuran, Glyme, Diglyme, Triglyme, Tetraglyme oder Dioxan sowie Mischungen derselben mit aliphatischen oder aromatischen Kohlenwasserstoffen wie z. B. Hexan, Heptan, Benzol, Toluol oder Xylol zur Anwendung. Bevorzugtes Lösungsmittel ist Tetrahydrofuran. Pro Mol der Verbindung der Formel II werden 1,00 bis 1,50 Mol, bevorzugt 1,00 bis 1,25 Mol, des zur Erstsubstitution verwendeten Grignardreagenzes eingesetzt. Die zur Zweitsubstitution dienende metallorganische Verbindung wird mit 1,00 bis 2,00 Mol, bevorzugt 1,00 bis 1,50 Mol, je Mol der Verbindung der Formel II verwendet.

Die Aufarbeitung des Reaktionsproduktes (Verbindung der Formel I) geschieht auf übliche Weise z. B. durch Zugabe von Wasser, Abtrennung der Salzlösung und Eindampfen der organischen Phase. Das erhaltene Rohprodukt ist so rein, daß eine einfache Dünnschichtdestillation ausreicht, um anschließend weitere chemische Reaktionen damit durchzuführen.

Das erfindungsgemäße Verfahren wird durch nachfolgende Beispiele verdeutlicht:

Ausführungsbeispiele:

Herstellung von 4-Ethoxyphenyldimethylsilan

In eine Lösung von 316 g Dichlormethylsilan in 1450 ml wasserfreiem Tetrahydrofuran tropft man bei - 40 °C die aus 481,4 g 4-Bromphenetol, 61,0 Magnesium und 1820 ml Tetrahydrofuran bereitete Grignardlösung. Anschließend rührt man noch 1 Stunde bei -40 °C nach und läßt die Mischung langsam auf Raumtemperatur erwärmen. Nach Zugabe von 1175 ml einer 3-M-Methylmagnesiumchloridlösung in Tetrahydrofuran erhitzt man 1 Stunde unter Rückfluß, kühlt auf 30 °C und zersetzt das überschüssige Grignardreagenz durch tropfenweise Zugabe von 1100 ml Wasser. Die Phasen werden getrennt und die wäßrige Phase mit 500 ml Tetrahydrofuran extrahiert. Die vereinigten organischen Phasen werden im Vakuum vom Lösungsmittel befreit und das Rohprodukt am Dünnschichtverdampfer destilliert. Man erhält 417 g Rohprodukt mit einer Reinheit von 94,3 % (GC), was einer Ausbeute von 91,1, % d. Th. entspricht.
Der Siedepunkt beträgt bei 0,012 bar 78 bis 82 °C.

In Anlehnung an diese Vorschrift erhält man u. a. folgende Verbindungen in hoher Ausbeute und Reinheit.

- 4-Ethoxyphenyl-ethyl-methylsilan 92,0 % Ausbeute
  Reinheit 95,7 % $Kp_{12}$ = 88 bis 90 °C
- Phenyl-hexyl-methylsilan 90,4 % Ausbeute
  Reinheit 94,6 % $Kp_{11}$ = 124 bis 128 °C
- (2-Ethylthien-5-yl)-dimethylsilan 90,2 % Ausbeute
  Reinheit 93,4 % $Kp_{12}$ = 90 bis 94 °C
- (2-Ethylthiopyrid-5-yl)-dimethyisilan 91,0 % Ausbeute
  Reinheit 93,5 % $Kp_{12}$ = 118 bis 124 °C
- < 2-(2,2,2-Trifluorethoxy)-pyrid-5-yl>- 90,8 % Ausbeute dimethylsilan
  Reinheit 92,8 % $Kp_{11}$ = 120 bis 124 °C

**Vergleichsbeispiel I:**

In eine Lösung von 316 g Dichlormethylsilan in 1450 ml wasserfreiem Tetrahydrofuran tropft man bei -40 °C 1175 ml einer 3M-Methylmagnesiumchloridlösung in Tetrahydrofuran langsam zu. Anschließend rührt man noch 1 Stunde bei -40 °C nach und läßt die Mischung langsam auf Raumtemperatur erwärmen.
Nach Zugabe einer Grignardlösung, die aus 481,4 g 4-Bromphenetol, 61,0 g Magnesium und 1820 ml Tetrahydrofuran bereitet wurde, erhitzt man 1 Stunde unter Rückfluß, kühlt auf 30 °C und zersetzt das überschüssige Grignardreagenz durch tropfenweise Zugabe von 1100 ml Wasser. Die Phasen werden getrennt und die wäßrige Phase mit 500 ml Tetrahydrofuran extrahiert.
Die vereinigten organischen Phasen werden im Vakuum vom Lösungsmittel befreit und das Rohprodukt am Dünnschichtverdampfer destilliert. Man erhält 234,6 g Produkt mit einer Reinheit von 95,4 % (GC), was einer Ausbeute von 46,3 % d. Th. entspricht. Der Siedepunkt beträgt bei 0,012 bar 78 bis 82 °C.

**Vergleichsbeispiel II:**

In eine Lösung von 316 g Dichlormethylsilan in 1450 ml wasserfreiem THF tropft man bei + 10 °C die aus 481,4 g 4-Bromphenetol, 61,0 g Magnesium und 1820 ml THF bereitete Grignardlösung. Anschließend rührt man noch 1 Stunde bei + 10 °C nach und läßt die Mischung langsam auf Raumtemperatur erwärmen.

Nach Zugabe von 1175 ml 3M-Methylmagnesiumchloridlösung in THF erhitzt man 1 Stunde unter Rückfluß, kühlt auf 30 °C und zersetzt das überschüssige Grignardreagenz durch tropfenweise Zugabe von 1100 ml Wasser.
Nach Abtrennung der wäßrigen Salzlösung wird die wäßrige Schicht mit Tetrahydrofuran gewaschen.

Das Lösungsmittel wird im Vakuum abdestilliert und das Rohprodukt am Dünnschichtverdampfer destilliert. Man erhält 332 g Produkt mit einer Reinheit von 93,2 %, was einer Ausbeute von 64,9 % d. Th. entspricht. Der Siedepunkt

ist bei 0,016 bar 84 bis 86 °C.

## Patentansprüche

1. Verfahren zur Herstellung von Aryl-alkylmethylsilanen der allgemeinen Formel I

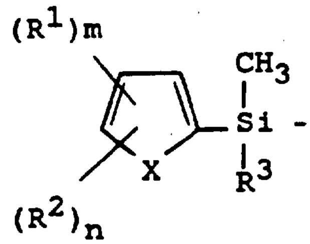

(I),

worin
X =CH=CH, N=CH, CH=N oder S,

$R^1$,$R^2$ = unabhängig voneinander H, Halogen, ($C_1$ bis $C_4$)-Alkyl, ($C_1$ bis $C_4$)-Alkoxy, ($C_1$ bis $C_4$)-Alkylthio, ($C_1$ bis $C_4$)-Halogenalkyl, ($C_1$ bis $C_4$)-Halogenalkoxy, ($C_1$ bis $C_4$)-Halogenalkylthio,
$R^3$ = ($C_1$ bis $C_6$)-Alkyl und
m,n = 0, 1 oder 2

bedeuten, dadurch gekennzeichnet, daß man Dichlormethylsilan II

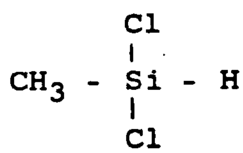

(II)

zunächst mit einem Arylmagnesiumhalogenid der allgemeinen Formel III

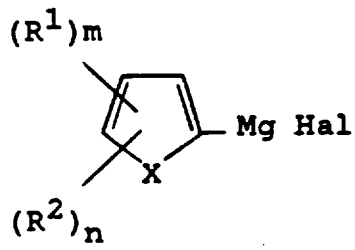

(III),

worin $R^1$, $R^2$, m, n und X die Bedeutung wie in Formel I besitzen und Hal=Halogen bedeutet, bei Temperaturen von -78 bis 0 °C und anschließend mit einem Alkylmagnesiumhalogenid der allgemeinen Formel IV

$$R^3\text{-Mg Hal} \quad (IV),$$

worin $R^3$ die Bedeutung wie in Formel I hat und Hal=Halogen bedeutet, gegebenenfalls in Gegenwart eines Lösungsmittels, umsetzt.

2. Verfahren gemäß Anspruch 1, dadurch gekennzeichnet, daß man die Verbindung der Formel II bei Temperaturen von -50 bis -10 °C mit der Verbindung der Formel III umsetzt.

3. Verfahren gemäß Anspruch 1 oder 2, dadurch gekennzeichnet, daß man Tetrahydrofuran als Lösungsmittel einsetzt.

## Claims

1. A process for the preparation of arylalkylmethylsilanes of the formula I

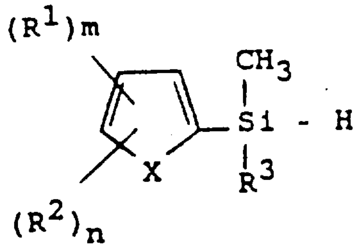

(I),

where
X is CH=CH, N=CH, CH=N or S,
$R^1$ and $R^2$ independently of one another are H, halogen, ($C_1$ to $C_4$)alkyl, ($C_1$ to $C_4$)alkoxy, ($C_1$ to $C_4$)alkylthio, ($C_1$ to $C_4$)haloalkyl, ($C_1$ to $C_4$)haloalkoxy or ($C_1$ to $C_4$)haloalkylthio,
$R^3$ is ($C_1$ to $C_6$)alkyl and
m and n are 0, 1 or 2, which comprises reacting dichloromethylsilane II

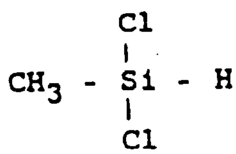

(II)

first with an arylmagnesium halide of the formula III

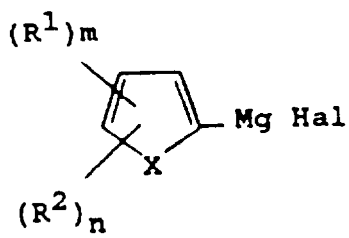

(III),

where $R^1$, $R^2$, m, n and X are as defined in formula I and Hal is halogen, at temperatures of from -78 to 0 °C, and subsequently with an alkylmagnesium halide of the formula IV

$$R^3\text{-Mg Hal} \qquad (IV),$$

where $R^3$ is as defined in formula I and Hal is halogen, if appropriate in the presence of a solvent.

2. The process as claimed in claim 1, which comprises reacting the compound of the formula II with the compound of the formula III at temperatures of from -50 to -10 °C.

3. The process as claimed in claim 1 or 2, which comprises using tetrahydrofuran as the solvent.

**Revendications**

1. Procédé de préparation d'aryl-alkyl-méthylsilanes de formule générale I

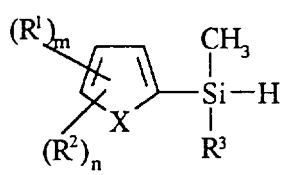

(I),

dans laquelle
X signifie CH=CH, N=CH, CH=N ou S,

$R^1$, $R^2$ représentent indépendamment l'un de l'autre H, un halogène, un alkyle en $C_1$-$C_4$, un alcoxy en $C_1$-$C_4$, un alkylthio en $C_1$-$C_4$, un halogénoalkyle en $C_1$-$C_4$, un halogénoalcoxy en $C_1$-$C_4$ ou un halogénoalkylthio en $C_1$-$C_4$,

$R^3$ est un alkyle en $C_1$-$C_6$ et

m, n sont égaux à 0, 1 ou 2,

caractérisé en ce que l'on fait réagir le dichlorométhylsilane II

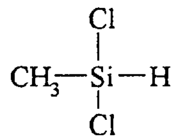

(II)

d'abord avec un halogénure d'arylmagnésium de formule générale III

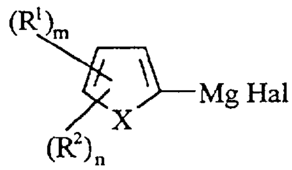

(III),

dans laquelle $R^1$, $R^2$, m, n et X ont la même signification que dans la formule I et Hal représente un halogène, à des températures de -78°C à 0°C, puis avec un halogénure d'alkylmagnésium de formule IV

$$R^3 - \text{Mg Hal} \qquad (IV),$$

dans laquelle $R^3$ a la même signification que dans la formule I et Hal représente un halogène, éventuellement en présence d'un solvant.

**2.** Procédé selon la revendication 1, caractérisé en ce que l'on fait réagir le composé de formule II avec le composé de formule III à des températures comprises entre -50 et -10°C.

**3.** Procédé selon la revendication 1 ou 2, caractérisé en ce que l'on utilise du tétrahydrofurane comme solvant.